# EUROPEAN PATENT APPLICATION

(11) **EP 3 124 915 A1**
(43) Date of publication of application: **01.02.2017**
(21) Application number: 16177111.8
(22) Date of filing: 30.06.2016
(51) Int. Cl.: G01C 21/36

(54) **METHOD FOR OPERATING A NAVIGATION DEVICE**

(30) Priority: 30.07.2015 IN 3912CH2015
(71) Applicant: Robert Bosch GmbH, 70442 Stuttgart (DE); Robert Bosch Engineering And Business Solutions Limited, Bangalore 560 095 State of Karnataka (IN)
(72) Inventor: Netto, Bruce Mario Savio, 641023 Coimbatore, Tamilnadu (IN); Nayyar, Vinayak, 500015 Secunderabad (IN); Ravi, Prashant, 60083 Chennai (IN); Kumar, Ravi Shankar, 846001 Darbhanga, Bihar (IN)
(74) Representative: Bee, Joachim

(57) **Abstract**

A navigation device (1000) is disclosed. The navigation device (1000) comprises a display (101) to display a map. An input unit (102) of the navigation device (1000) receives a user input. A processor (103) of the navigation device (1000) recognizes the user input as a zooming action or a panning action on the map. The processor (103) provides at least one zooming option or at least one panning option based on the recognized user input. The processor (103) receives a user selection corresponding to the at least one zooming option or the at least one panning option. The processor (103) zooms the map or pans the map based on the received user selection.

## Description

The following specification describes and ascertains the nature of this invention and the manner in which it is to be performed:

### Field of the invention

The invention relates to a method for operating a navigation device. More specifically, it relates to zooming and panning of a map displayed in the navigation device.

### Background of the invention

A navigation device notifies a driver of a vehicle about a current location of the vehicle on a map. The navigation device calculates a route to a destination as provided by the driver from the current location of the vehicle. The navigation device guides the driver to the destination along the calculated route. The navigation device displays the map via a display. The information characterizing the map is usually enormous. The display of the navigation device is relatively of smaller size. For the driver of the vehicle to view the details of the map displayed, zooming in on an area of interest is required. Zooming is also required as the driver cannot see an entire road picture when the vehicle travels at a higher speed. Panning action which is the dragging the map is required when the driver is required to view a different section of the map.

In current navigation devices, the zoom and pan operations available on the map are restricted in terms of the information and capabilities. When the driver performs a pan operation on the map to a position over a larger geographical area, there may be a situation wherein the driver is unable to return back to his original location. Also, the pan capability is proportional to the swipe of the driver. So to swipe over a large geographical area the driver will have to pan multiple times before reaching the desired position. The effort of the driver is large in the existing navigation devices.

When the driver tries to perform a pinch zoom operation on the map, the driver zooms in or out of the next level based on a scale factor that is available on the navigation device. The driver is not able to vary this available scale on the navigation device. Hence, it is required to improve the capability of the pan and the zoom operation on the map in order to decrease access times and increase the types of interaction available to the driver for panning and zooming.

US patent, 8584035, discloses a method for displaying on a touch screen a portion of a large scale graphical space. The method comprises receiving from a user of the device an input to pan within the graphical space, automatically generating a pop up graphical panning control in response to receiving the user input, and receiving a user input to the panning control and providing panning in the graphical space, wherein movement of the panning control in a single selection is able to pan the display across a substantial portion of the large scale graphical space.

### Short description of the drawing

An exemplifying embodiment of the invention is explained in principle below with reference to the drawings. The drawings are,
Figure 1 illustrates a navigation device in accordance with this invention;
Figure 2 exemplary illustrates the display of the navigation device displaying at least one zooming option to a user;
Figure 3 exemplary illustrates the panning action on the display of the navigation device;
Figure 4 exemplary illustrates the display with at least one panning option; and
Figure 5 illustrates a method to control the navigation device in accordance with this invention.

### Description of the invention

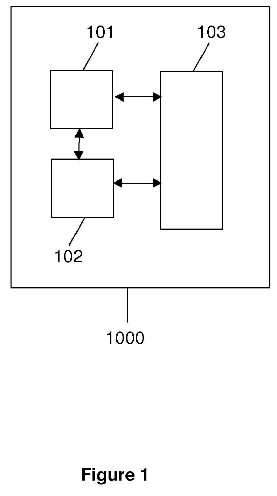

Figure 1 illustrates a navigation device 1000 in accordance with this invention. The navigation device 1000 comprises a display 101 to display a map. An input unit 102 of the navigation device 1000 receives a user input. A processor 103 of the navigation device 1000 recognizes the user input as a zooming action or a panning action on the map. The processor 103 provides at least one zooming option or at least one panning option based on the recognized user input. The processor 103 receives a user selection corresponding to the at least one zooming option or the at least one panning option. The processor 103 performs zooming or panning of the map based on the received user selection.

The navigation device 1000 is, for example, a navigation device mounted on a dashboard of a vehicle. The navigation device 1000 may be a portable device carried into a vehicle by a user. The navigation device 1000 may also be, for example, a computer, a personal digital assistant, a tablet, etc. The navigation device 1000 comprises a global positioning system (GPS) receiver for receiving GPS signals from a plurality of GPS satellites. The GPS receiver receives a current location of the navigation device 1000. The navigation device 1000 comprises a map database for storing a plurality of maps, for example, road maps. The map may also comprise image data, road shapes and point-of-interest (POI) data.

When the navigation device 1000 is in a vehicle, the navigation device 1000 displays the current location of the vehicle on the map via the display 101. The navigation device 1000 displays the map via the display 101 based on the current location of the vehicle and a destination as selected by the user. The map may be a grid of road sections with points of intersection.

The input unit 102 of the navigation device 1000 receives the user input. The input unit 102 is a touch screen interface, a mouse, or the like. The user input is a voice input, a touch input, or the like. For example, the user input is a touch gesture performed by the user on a touch sensitive display. Here, the touch sensitive display acts as the input unit 102 to receive the user selection. The input unit 102 receives the touch gesture performed by the user. In another example, the input unit 102 receives voice commands from the user. The input unit 102 may also receive a combination of voice commands and touch gestures from the user. The input unit 102 may be a keyboard or a mouse to receive the user selection.

The navigation device 1000 comprises the processor 103 to recognize the received user input. When a drag or a swipe action is detected by the user on the map displayed via the display 101, the processor 103 recognizes the user's action as a panning action. In an example, when the user swipe across the map displayed on a touch sensitive display using a finger, the processor 103 recognizes the gesture as a panning action.

When the processor 103 detects a request to change a map scale by the user, the processor 103 recognizes the action as a zooming action. In an example, when the processor 103 detects a pinch gesture using two fingers of the user on the touch sensitive display, the processor 103 recognizes the gesture as a zooming action performed by the user. In another example, when the user operates a zoom bar comprising a plurality of zoom levels along an axis of the zoom bar which are an indicative of a map scale of the map, the processor 103 recognizes the gesture as a zooming action.

Consider for example, the display 101 is a touch sensitive display. The user interacts with the navigation device 1000 through touch gestures. The touch gesture may be a single touch gesture or a multi touch gesture. The user moves the fingers on the touch sensitive display of the device. For a single touch gesture, the user uses a single finger to perform an action on the touch sensitive display of the navigation device 1000. A multi touch gesture is made using two or more fingers of the user on the touch sensitive display. A zooming action by the user on the touch sensitive display is performed via a pinch using two fingers on the touch sensitive display of the navigation device 1000. A panning action by the user on the touch sensitive display is performed via a drag or swipe gesture where the user touches the touch sensitive display at a first position and drags it in a specific direction keeping the finger in contact with the touch sensitive display. The navigation device 1000 triggers a specific action for each touch gesture performed by the user.

The processor 103 provides one or more zooming options or panning options based on the recognized user input. In an embodiment, the user predefines the zooming options and the panning options.

When the processor 103 recognizes the zooming action performed by the user, the processor 103 provides one or more zooming options to the user. The zooming options are provided to the user of the navigation device 1000 via the display 101. The zooming options can be a list of destinations, list of waypoints, point of interests (POIs), zoom levels or the like. The zoom levels are predefined and are a set of default values.

In an example, the display 101 of the navigation device 1000 displays the zooming options in the shape of a semicircular interface comprising the zooming options. When a zooming option comprises a plurality of sub options, the processor 103 displays the sub options upon selection of the particular zooming option. The processor 103 also indicates a direction of the current location of the vehicle via an arrow head next to the semicircular interface. This helps the user of the navigation device 1000 to navigate back to the current location of the vehicle.

When the processor 103 recognizes the panning action performed by the user, it provides list of panning options to the user. The processor 103 provides the panning options for panning the displayed map based on a zoom level of the map. The zoom level is an indicative of the map scale. The navigation device 1000 displays the panning options to the user via the display 101. The panning options are proportionate to the zoom level. Examples for the panning options given to the user could be is a distance from a current location (for instance, 20km, 40km, 60km, etc.), a list of destinations, a list of waypoints, a list of POIs, etc. In an example, a panning option defines a predefined distance to pan from the current location of the navigation device 1000 present in the vehicle. The processor 103 also provides an arrow head pointing in the direction to the current location of the vehicle. The processor 103 identifies major destinations, way points and the POIs that are present in the map in the direction of zooming and provides as options to the user.

The processor 103 receives a user selection corresponding to the at least one zooming option or the at least one panning option. For a zooming action performed by the user, the processor 103 provides at least one zooming option. The user selects a zooming option from the at least one zooming option displayed on the display 101. Similarly, for a panning action performed by the user, the processor 103 provides at least one panning option. The user selects a panning option from the at least one panning option displayed on the display 101.

The processor 103 zooms the map or pans the map based on the received user selection. The processor 103 enables a zoom level of the map based on user selection corresponding to the at least one zooming option. In an example, the user selects one of the POIs from to zoom into an area around the POI on the map. Similarly, the processor 103 pans the map based on the panning option selected by the user. The processor 103 pans the map to a user specified distance held.

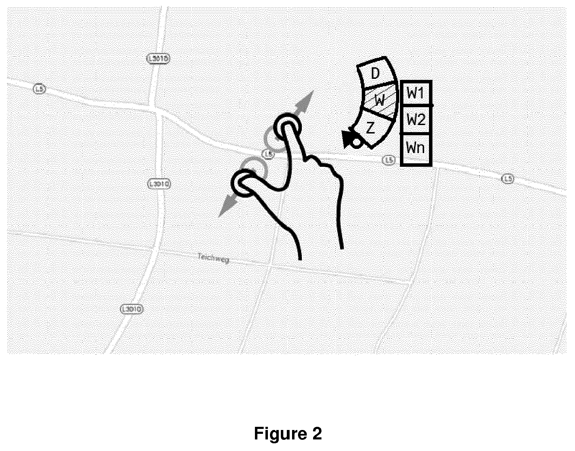

Figure 2 exemplary illustrates the display 101 of the navigation device 1000 displaying multiple zooming options to the user. When the processor 103 recognizes the user input as a zooming action, the processor 103 provides a list of zooming options via a semicircular interface on the display 101. The semicircular interface comprises the zooming options D, W and Z. The term D represents the destination. The term W represents a list of waypoints. The term Z represents a list of zoom levels corresponding to the map scale. The current position of the vehicle is represented using the arrow head, which in this case points towards the south west direction. The user of the navigation selects W from the displayed zooming options. Upon selection of the zooming option W, the navigation device 1000 further displays a list of sub options which are the waypoints W1, W2 and Wn. The user can select the waypoint of his choice as the zooming option from the displayed list of sub options to zoom into. The processor 103 takes the user directly from the current position of the vehicle to the selected waypoint, without having to perform a series of swiping actions to move the map and search for the waypoint.

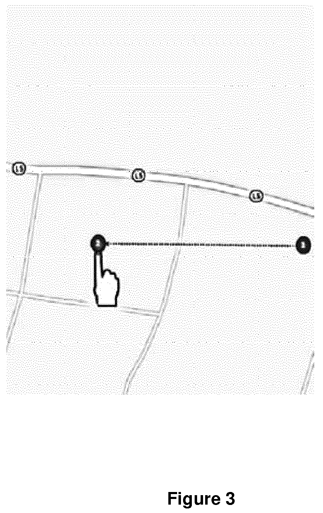

Figure 3 exemplary illustrates the panning action on the display 101 of the navigation device 1000. The processor 103 recognizes the panning action performed by the user. In this case, the input unit 102 is the touch sensitive display of the navigation device 1000.

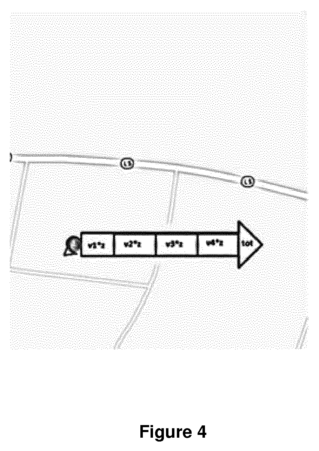

The user executes the panning action by swiping a finger across the display 101 from point 1 to point 2. The processor 103 recognizes the swipe of a finger of the user across the touch sensitive display as the panning action. Figure 4 exemplary illustrates the display 101 with the at least one panning option. Once the processor 103 recognizes a panning action performed by the user from point 1 to point 2, the processor 103 provides the at least one panning option for panning the displayed map based on the zoom value of the map. The panning options are v1, v2, v3 and v4. For example, the panning options represent distance in kilometers from the current location of the navigation device 1000 in the direction the panning action is performed. The values of v1, v2, v3 and v4 are 10 kilometers, 20 kilometers, 30 kilometers and 40 kilometers respectively.

The values of v1, v2, v3 and v4 are based on the current zoom level (z) of the displayed map. Thus, the panning options are v1*z, v2*z, V3*z and v4*z respectively. A panning arrow head displays the total distance panned from the current location, which is represented by (tot). An arrow head at point 2 is displayed pointing towards the current location of the navigation device 1000.

The user is aware of the distance and direction panned from the current position of the vehicle. This helps the user to traverse the map more easily and locate areas of interest in and around the current position. In case the user has panned the map over a large distance, the user gets to know the distance panned from the current position While panning the map with the map data as reference, the navigation device 1000 displays a maximum limit to which panning is possible in a particular direction.

In an embodiment, the user can set a panning option as a default panning value by selecting the panning option for a predefined time interval. Once the default panning value is set by the user, the panning options disappear from the display 101 of the navigation device 1000. In an example, for a touch sensitive display, the user touches a panning option to be set as a default panning value for a predefined time interval. Similarly, the user can reset the default panning value by selecting a panning option for the predefined time interval.

In an embodiment, the panning action is independent of the zooming action. In another embodiment, the panning action follows the zooming action.

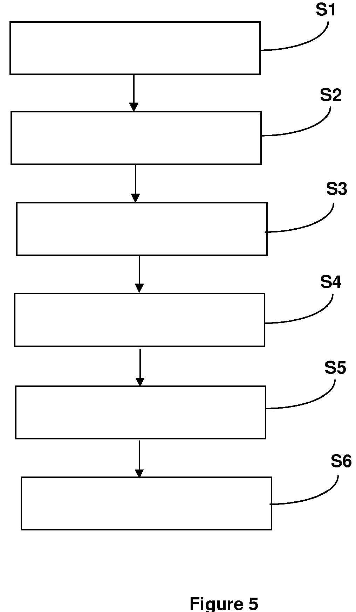

Figure 5 illustrates a method to control the navigation device 1000 in accordance with this invention. At step S1, a map is displayed on a display 101. At step S2, a processor 103 of the navigation device 1000 receives a user input through an input unit 102. At step S3, navigation device 1000the user input is recognized as a zooming action or a panning action on the map by the processor 103. At step S4, the processor 103 provides at least one zooming option or at least one panning option based on the recognized user input. At step S5, the processor 103 receives a user selection corresponding to the at least one zooming option or the at least one panning option. At step S6, the processor 103 zooms the map or pans the map based on the received user selection.

The method provides a faster zooming to locations on the map displayed via the display 101. The method also provides faster panning to locations on the map. The zooming options and the panning options provide fixed levels for better usability. The method provides the user of the navigation device 1000 with better control over the zooming action and the panning action. The navigation device 1000 enables quick access to points on the route such as waypoints, POIs and the destination. This method is especially useful when the route to the destination is over a large geographical area.

It must be understood that the embodiments explained and the example provided in the above detailed description in only illustrative and does not limit the scope of this invention. The scope of this invention is limited only by the scope of the claims. Many modification and changes in the embodiments aforementioned are envisaged and are within the scope of this invention.

## Claims

1. A method for operating a navigation device 1000, said method comprising:
displaying a map on a display 101;
receiving an user input from a user;
recognizing the user input as a zooming action or a panning action on said map;
providing at least one zooming option or at least one panning option based on the recognized user input;
receiving a user selection corresponding to said at least one zooming option or said at least one panning option; and
performing zooming or panning of said map based on said received user selection.

2. The method as claimed in claim 1, wherein said user input is a voice input, a touch input, or the like.

3. The method as claimed in claim 1, wherein said zooming option is a destination, at least one waypoint, at least one point of interest (POI), at least one zoom level or the like.

4. The method as claimed in claim 1, wherein said panning option is a distance from a current location, a current location, a destination, at least one waypoint, at least one point of interest (POI)or the like.

5. The method as claimed in claim 1, wherein setting a default pan value when said user selects a panning value for a predefined time interval.

6. A navigation device 1000, said navigation device 1000 comprising:
a display 101 to display a map;
an input unit 102 to receive an user input;
a processor 103 adapted to recognize the user input as a zooming action or a panning action on said map;
**characterized in that**
the processor 103 adapted to
provide at least one zooming option or at least one panning option based on the recognized user input;
receive a user selection corresponding to said at least one zooming option or said at least one panning option; and
zoom said map or pan said map based on said received user selection.

7. The device as claimed in claim 1, wherein said zooming option is a destination, at least one waypoint, at least one point of interest (POI), at least one zoom level or the like.

8. The device as claimed in claim 1, wherein said panning option is a distance from a current location, a destination, at least one waypoint, at least one point of interest (POI)or the like.

9. The device as claimed in claim 1, wherein said input unit 102 is a touch screen interface, a mouse, or the like.

10. The device as claimed in claim 1, wherein said user input is a voice input, a touch input, or the like.
